Europäisches Patentamt

European Patent Office

Office européen des brevets

(19)

(11) Publication number: **0 479 092 A2**

## EUROPEAN PATENT APPLICATION

(12)

(21) Application number: **91116174.3**

(22) Date of filing: **24.09.91**

(51) Int. Cl.⁵: **F28C 1/02, F28F 25/02**

(30) Priority: **27.09.90 IT 6196390 U**

(43) Date of publication of application:
**08.04.92 Bulletin 92/15**

(84) Designated Contracting States:
**AT BE CH DE DK ES FR GB GR IT LI LU NL SE**

(71) Applicant: **TESSER ANTONIO & FIGLI S.N.C.**
**Via Piave, 134**
**I-31044 Montebelluna, Treviso(IT)**

(72) Inventor: **Tesser, Antonio**
**Via Piave, 134**
**I-31044 Montebelluna (Treviso)(IT)**

(74) Representative: **Piovesana, Paolo**
**Corso del Popolo, 70**
**I-30172 Venezia-Mestre(IT)**

(54) **Air cooling tower, particularly for ice-cream plants.**

(57) Air cooling tower, particularly for ice-cream plants, comprising from the top to the bottom:
- an exit pipe (4) of the air,
- a spraying nozzles (7) entry duct (6) of the water to be cooled,
- an insulating packaging (13)
- an entry pipe (2) for the cooling air,
- an exit pipe (2) for the cooled water,

characterised by comprising, near the entry duct of the water, a fan (9) for spreading the water on the underlying packaging.

The present invention relates to an air cooling tower, particularly for ice-cream plants.

Air cooling towers are known used to decrease the temperature of the cooling water coming out from the condenser of the refrigerating unit of an ice-cream plant.

In order to advantageously operate in refrigerating units, that is to reach low temperature even with a low absorption of energy from the compressor, it is necessary that the most quantity of heat absorbed in the evaporator is discharged to the outside in the condenser. This thermic exchange can be carried out either by providing the condenser with a large exchanging surface, but this causes increased encumbrances sizes, or by cooling the condenser with a fluid having a low temperature, generally with water. Then the water is fed to a cooling tower and sprayed from the top on an underlying packaging having the purpose of favouring a crossed flow with external air fed by a fan. The cooled air collected at the bottom of the tower is newly forwarded in circulation through a pump, generally a centrifugal pump.

In ice-cream refrigeration plants, the cooling water coming out from the condenser has generally a temperature of about 30 to 85 °C according to the season, whereas the water coming out from the tower which enters into the condenser must have, in order to ensure an effective thermal exchange, a temperature not higher than 24 °C.

A drawback of these towers consists in a certain difficulty to reach this temperature since preferential paths of the water form inside the packaging with consequent reduction of the thermal exchange which, as already said, affects the energy absorbed by the compressor.

An aim of the invention is to eliminate such a drawback and to realize an air cooling tower which allows to cool the water to be forwarded to the condenser at a temperature which ensures the correct operating of the refrigerating unit.

A further aim of the invention is to realize a cooling tower in which the increase of the thermal exchange doesn't require any energy consumption or an icrease of the exchange surface.

These aims are achieved according to the invention through an air cooling tower, particularly for ice-cream plants, comprising from the top to the bottom

- an exit pipe of the air,
- a spraying nozzles entry duct of the water to be cooled,
- an insulating packaging,
- an entry pipe for the cooling air,
- an exit pipe for the cooled water,

characterised by comprising, near the entry duct of the water, a fan for spreading the water on the underlying packaging.

The present invention is hereinafter further clarified with reference to the enclosed sheet of drawing showing in longitudinal section a cooling tower according to the invention.

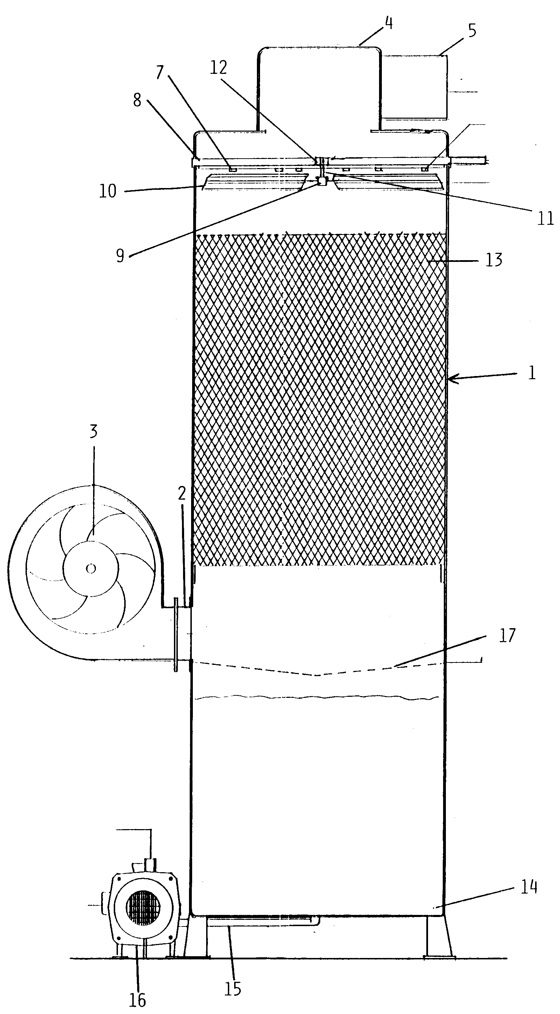

As can be seen in the drawing the air cooling tower according to the invention consists of a holow closed cylinder-shaped supporting frame 1 provided, near the middle zone, with a pipe 2 for the admission of cooling air fed by a fan 3 and upperly with a draft flue 4 to which an air exit pipe 5 is connected.

Under the draft flue 4 a duct 6 with spraying nozzles 7 for the water is provided.

A fan 9 is mounted at the same frame 8 supporting the duct 6, having stainless steel blades 10 with adjustable inclination. In particular the fan is supported on a shaft 11 idle mounted on a bearing 12.

Inside the tower, among the fan 9 and the air entry pipe 2 an insulating packaging 13 is provided having a honeycomb structure.

On the bottom of the tower a reservoir tank 14 for the water is provided having a duct 15 for the discharge with a centrifugal pump 16.

Furthermore in underlying position to the pipe 2 a grid 17 is mounted having the purpose of "controlling" the descent of the water onto the bottom in order to avoid turbulences which could distort the survey of the probes placed on the bottom of the tower.

The operating of the cooling tower is that of traditional cooling tower:
the water coming from the condenser enters into the upper part of the tower to be spread through the spraying nozzles 7 on the packaging 13. This spreading is made easier due to the presence of the blades 10 which, rotated by the air coming through the pipe 2, ensure in the packaging a more uniform distribution of the water crossing the air which rises.

Once the water has passed trough the packaging 13, it falls onto the reservoir tank 14 to be forwarded to the condenser.

Tests have proved that, on the same operating terms (air flow and water flow), the water coming out from the tower has a temperature of 3-4 °C lower than the temperature of water coming out from a traditional tower.

From the aforesaid it clearly results that the cooling tower according to the invention allows to keep constant the energy absorbed by the compressor even with changeable condition of entry temperature of the water without requiring the use of accessories.

**Claims**

1. Air cooling tower, particularly for ice-cream plants, comprising from the top to the bottom
- an exit pipe (4) of the air,
- a spraying nozzles (7) entry duct (6) of the water to be cooled,
- an insulating packaging (13)
- an entry pipe (2) for the cooling air,
- an exit pipe (2) for the cooled water, characterised by comprising, near the entry duct of the water, a fan (9) for spreading the water on the underlying packaging.

2. Tower according to claim 1 characterised in that the fan (9) is mounted on an idle rotating shaft (11).

3. Tower according to claim 1 characterised in that the fan (9) has the blades (10) with adjustable inclination.